# EUROPÄISCHE PATENTSCHRIFT

(11) **EP 3 936 900 B1**
(45) Veröffentlichungstag und Bekanntmachung des Hinweises auf die Patenterteilung: **04.01.2023**
(21) Anmeldenummer: 21156450.5
(22) Anmeldetag: 11.02.2021
(51) Int. Cl.: G01V 8/10, G01V 8/20, G01V 8/22

(54) **OPTISCHER SENSOR**
OPTICAL SENSOR
CAPTEUR OPTIQUE

(30) Priorität: 07.07.2020 DE 202020103911 U
(43) Veröffentlichungstag der Anmeldung: 12.01.2022
(73) Patentinhaber: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(56) Entgegenhaltungen:
- DE-A1-102005 037 490
- JP-A- 2010 239 560
- JP-U- 3 205 135
- KR-B1- 101 493 810
- US-A1- 2010 163 760

## Beschreibung

Die Erfindung betrifft einen optischen Sensor.

Derartige optische Sensoren dienen zur Erfassung von Objekten in einem Erfassungsbereich. Die optischen Sensoren weisen generell wenigstens eine Sensorkomponente mit einer Linse auf, wobei die Sensorkomponente zur Erfassung von Objekten ausgebildet ist. Zudem ist eine Auswerteeinheit vorgesehen, mittels derer Sensorsignale einer Sensorkomponente zur Generierung eines Objektfeststellungssignals ausgewertet werden.

Prinzipiell können derartige optische Sensoren zur Objektidentifikation dienen, beispielsweise können die optischen Sensoren als Codeleser ausgebildet sein. Vorteilhaft erfüllen die optischen Sensoren Überwachungsfunktionen, das heißt mit den optischen Sensoren wird erfasst, ob sich ein Objekt in einem Überwachungsbereich aufhält.

Ein Beispiel für einen derartigen optischen Sensor ist ein Lichtvorhang, der ein Sendergehäuse mit einer Reihenanordnung von Lichtstrahlen emittierenden Sendern mit jeweils einer zugeordneten Sendeoptik in Form einer Linse aufweist. Weiterhin weist der Lichtvorhang ein Empfängergehäuse mit einer Reihenanordnung von Lichtstrahlen empfangenden Empfängern auf, wobei den Empfängern jeweils eine Empfangsoptik in Form einer Linse zugeordnet ist.

Die Linsen befinden sich an der Frontseite des Sendergehäuses beziehungsweise Empfängergehäuse und bilden dort jeweils eine Reihenanordnung.

Generell weisen derartige Lichtvorhänge auch optische Anzeigen, insbesondere Symbolanzeigeeinheiten auf, um aktuelle Statusinformationen des Lichtvorhangs anzuzeigen.

Da sich die Linsen über nahezu die gesamte Frontseite des Sendergehäuses oder Empfängergehäuses erstrecken, ist es schwierig, dort auch noch die optischen Anzeigen zu platzieren.

Eine Möglichkeit besteht darin, die optischen Anzeigen zwischen den Linsen anzuordnen. Da dort jedoch wenig Platz zur Verfügung steht, müssen die optischen Anzeigen sehr klein ausgeführt sein und sind daher schlecht sichtbar.

Prinzipiell können die optischen Anzeigen auch seitlich oder oberhalb oder unterhalb der Linsen angebracht werden. Dazu muss aber das jeweilige Gehäuse breiter und/oder höher ausgeführt werden, wodurch sich die Bauform des Gehäuses und damit des gesamten optischen Sensors in unerwünschter Weise vergrößert.

In JP 3 205 135 U ist ein optischer Sensor beschrieben, dessen Sensorkomponenten in einem Gehäuse integriert sind. In der Frontwand des Gehäuses befindet sich eine Öffnung, die mit einer Sendeoptik in Form einer Linse abgeschlossen ist. An dem die Sendeoptik umgebenden Segment der Frontwand sind Anzeigeelemente vorgesehen.

In KR 101 493 810 B1 ist ein optischer Sensor beschrieben, dessen Sensorkomponente in einem Gehäuse integriert sind. In der Frontwand des Gehäuses ist eine Optik vorgesehen, die von Anzeigeelementen umgeben ist.

Die DE 10 2005 037 490 A1 betrifft einen optischen Sensor mit wenigstens einem Sender, wenigstens einem Empfänger und einer Auswerteeinheit zur Generierung eines Objektfeststellungssignals. Der Sender und/oder der Empfänger und/oder wenigstens Komponenten der Auswerteeinheit sind durch ein Druckverfahren auf wenigstens einer Polymerfolie aufgebracht. Weiterhin weist der optische Sensor Anzeigeelemente auf.

Die JP 2010 239 560 A betrifft ein Lichtgitter mit einer Sendeeinheit in welcher Sender mit zugeordneten Sendeoptiken vorgesehen sind. Zudem ist eine Empfängereinheit mit Empfängern und zugeordneten Empfangsoptiken vorgesehen. Seitlich zu den Empfangsoptiken sind Anzeigeelemente vorgesehen.

Ein hierzu entsprechendes Lichtgitter ist in US 2010/0163760 A1 beschrieben. Der Erfindung liegt die Aufgabe zugrunde, für einen optischen Sensor der eingangs genannten Art eine platzsparende und demnach übersichtliche Möglichkeit eine Anzeige bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischer Sensor zur Erfassung von Objekten in einem Erfassungsbereich mit wenigstens einer eine Linse aufweisenden Sensorkomponente in einem Gehäuse und mit wenigstens einer Auswerteeinheit zur Generierung eines Objektfeststellungssignals abhängig von Sensorsignalen der wenigstens einen Sensorkomponente. In einer Wand des Gehäuses sind mehrere die Linse umgebende Anzeigeelemente vorgesehen, die sich zu einer Symbolanzeigeeinheit ergänzen. Weiterhin sind Anzeigeelemente vorgesehen, die zwei Linsen umgeben, wobei diese Anzeigeelemente eine Siebensegmentanzeige ausbilden. Alternativ bildet die Symbolanzeigeeinheit eine Bargraph-Anzeige, wobei die Symbolanzeigeeinheit zwischen einer Bargraph-Anzeige und einer Symbolanzeige umschaltbar ist.

Dadurch dass die Anzeigeelemente um eine oder vorzugsweise wenigstens zwei Linsen herum angeordnet sind, wird eine besonders platzsparende Anordnung der Anzeigeelemente ermöglicht, das heißt diese Anordnung der Anzeigeelemente vergrößert die Bauform des Gehäuses und damit des optischen Sensors nicht.

Da mehrere Anzeigeelemente um die Linse oder die Linsen herum angeordnet sind, wird zudem eine großflächige Symbolanzeigeeinheit die von einem Benutzer gut erkannt werden kann.

Schließlich ist vorteilhaft, dass mit der aus den Anzeigeelementen aufgebauten Symbolanzeigeeinheit unterschiedliche Symbole angezeigt werden können, so dass auch komplexere Informationen visualisiert werden können.

Erfindungsgemäß sind die Anzeigeelemente linienförmig ausgebildet. Damit können die Anzeigeelemente ohne großen Platzbedarf dicht entlang der Ränder der jeweiligen Linse entlang geführt sein.

Um mit der Symbolanzeigeeinheit unterschiedliche Symbole anzeigen zu können werden die Anzeigeelemente selektiv zur Abstrahlung von sichtbarem Licht aktiviert.

Die Anzeigeelemente können dabei im einfachsten Fall alle gleichfarbiges monochromes sichtbares Licht abstrahlen. Alternativ können die Anzeigeelemente unterschiedlich farbiges Licht abstrahlen, insbesondere unterschiedliche RGB-(Rot-Grün-Blau) Kombinationen.

Gemäß einer konstruktiv vorteilhaften Ausführungsform weise die Anzeigeelemente jeweils einen Lichtleiter und eine zugeordnete Anzeige-Leuchtiode auf.

Dabei wird bei einem aktivierten Anzeigeelement von der Anzeige-Leuchtiode emittiertes sichtbares Licht in den Lichtleiter eingekoppelt.

Durch die Lichtleiter wird eine besonders gute Sichtbarkeit der Anzeigeelemente erzielt. Zudem wird durch die Anzeigeelemente in Form von Lichtleitern eine unerwünschte Erzeugung von Störlicht innerhalb des Gehäuses vermieden.

Gemäß einer vorteilhaften Ausgestaltung sind mittels der Symbolzeigeeinheit unterschiedliche alphanumerische Zeichen anzeigbar.

Durch die Anzeigemöglichkeit unterschiedlicher Buchstaben und Ziffern können komplexere Informationen wie zum Beispiel Fehlercodes oder Statusmeldungen des optischen Sensors angezeigt werden.

Gemäß einer ersten Variante der Erfindung sind besonders Anzeigeelemente vorgesehen, die zwei Linsen umgeben, wobei diese Anzeigeelemente eine Siebensegmentanzeige ausbilden.

Dadurch wird auf einfache Weise eine Ziffernanzeige realisiert, die aus sieben einzelnen Anzeigeelementen aufgebaut ist. Insbesondere für den Fall, dass diese

Linsen sehr dicht benachbart liegen, so dass zwischen diesen kein Anzeigeelement Platz findet, können die Anzeigeelemente noch in Subsegmente unterteilt werden.

Gemäß einer weiteren Variante der Erfindung bildet die Symbolanzeigeeinheit eine Bargraph-Anzeige aus. Dabei ist die Symbolanzeigeeinheit zwischen einer Bargraph-Anzeige und einer Symbolanzeige umschaltbar.

Diese Variante ist dann vorteilhaft, wenn mehrere Symbolanzeigeeinheiten hintereinander angeordnet sind. Dadurch entsteht insbesondere eine längere durchgehende Reihe von Anzeigeelementen, die als Bargraph genutzt werden kann.

Dadurch können Anzeigeelemente dieser Anordnung einerseits als Symbolanzeigeeinheit zur Anzeige von Symbolen und andererseits als Bargraph-Anzeige genutzt werden, wodurch eine erhöhte Funktionalität der Anzeige erzielt wird. Weiter vorteilhaft sind Anzeigeelemente in Subelemente unterteilt.

Die Subelemente können besonders platzsparend im Bereich der Linsen angeordnet werden.

Der optische Sensor kann in unterschiedlichen Ausprägungen ausgebildet sein. Dabei kann der optische Sensor zur Objektidentifikation dienen und beispielsweise Codeleser ausgebildet sein.

Bevorzugt dient der optische Sensor zur Erfassung von Objekten in einem Überwachungsbereich. Dann kann der optische Sensor als Lichtschranke, Reflexionslichtschranke, Lichttaster oder auch als Distanzsensor ausgebildet sein.

In diesen Fällen kann der optische Sensor wenigstens ein Gehäuse mit nur einer Linse aufweisen, welche von Anzeigeelementen zur Ausbildung einer Symbolanzeigeeinheit umgeben ist. In diesem Fall kann mit der Symbolanzeigeeinheit typischerweise nur eine kleinere Zahl verschiedener Symbole, beispielsweise eine "0" oder "1" angezeigt werden.

Vorteilhaft weist der optische Sensor ein oder mehrere Gehäuse mit mehreren Linsen auf, die von Anzeigeelementen zur Ausbildung von Symbolanzeigeeinheiten vorgesehen sind. In diesem Fall können typisch mehrere verschiedene Symbole angezeigt werden, beispielsweise durch eine Symbolanzeigeeinheit in Form einer Siebensegmentanzeige.

Ein Beispiel hierfür ist ein optischer Sensor in Form eines Lichtvorhangs.

Gemäß einer ersten Variante, die nicht Teil der beanspruchten Erfindung ist, weist der Lichtvorhang ein Sendergehäuse mit einer Reihenanordnung von Lichtstrahlen emittierenden Sendern und ein Empfängergehäuse mit Lichtstrahlen empfangenden Empfängern auf, wobei den Sendern jeweils eine Senderseite in Form einer Linse und en Empfängern jeweils eine Empfangsoptik in Form einer Linse zugeordnet sind.

In diesem Fall können die die Symbolanzeigeeinheit bildenden Anzeigeelemente sowohl am Sendergehäuse als auch am Empfängergehäuse vorgesehen sein.

Gemäß einer weiteren Variante, die nicht Teil der beanspruchten Erfindung ist, ist dieser ein Reflex-Lichtvorhang, dessen Sender und Empfänger in einem gemeinsamen Gehäuse integriert sind.

Dabei kann jeweils einem Sender-Empfängerpaar eine gemeinsame Optik in Form einer Linse zugeordnet sein.

Dann sind die Anzeigeelemente der Symbolanzeigeeinheit um diese Linse herum angeordnet.

Die Erfindung wird im Folgenden anhand der Zeichnungen erläutert. Es zeigen:
- Fig 1:: Ausführungsbeispiel des erfindungsgemäßen optischen Sensors in Form eines Lichtvorhangs.
- Fig 2:: Erstes Ausführungsbeispiel einer Symbolanzeigeeinheit für den erfindungsgemäßen optischen Sensor.
- Fig 3:: Zweites Ausführungsbeispiel einer Symbolanzeigeeinheit für den erfindungsgemäßen optischen Sensor.
- Fig 4:: Konstruktive Ausgestaltung einer Symbolanzeigeeinheit gemäß Figur 2 oder 3.

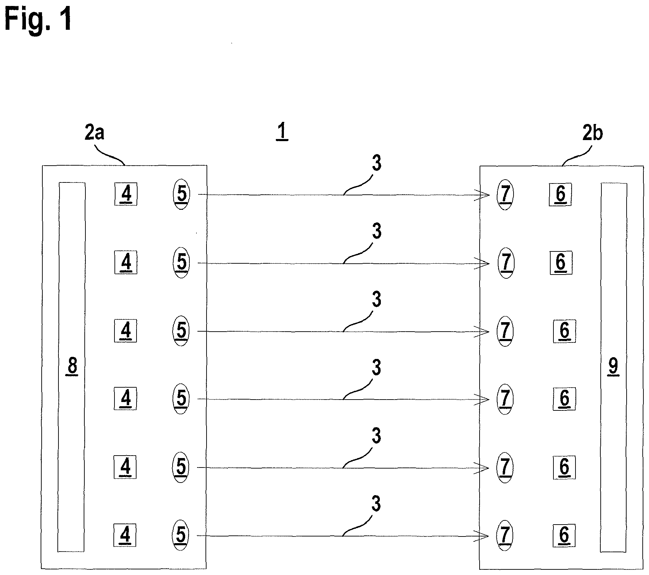

Figur 1 zeigt schematisch den Aufbau eines Ausführungsbeispiels des erfindungsgemäßen optischen Sensors 1 in Form eines Lichtvorhangs zur Erfassung von Objekten innerhalb eines Überwachungsbereichs.

Der Lichtvorhang weist ein Sendergehäuse 2a als erstes Gehäuse mit einer Reihenanordnung von Lichtstrahlen 3 emittierenden Sendern 4 und diesen zugeordneten Sendeoptiken 5 auf. Weiterhin weist der Lichtvorhang ein Empfängergehäuse 2b als zweites Gehäuse mit einer Reihenanordnung von Lichtstrahlen 3 empfangenden Empfängern 6 auf, welchen jeweils eine Empfangsoptik 7 vorgeordnet ist. Sowohl die Sendeoptiken 5 als auch die Empfangsoptiken 7 sind in Form von Linsen ausgebildet.

Das Sendergehäuse 2a und das Empfängergehäuse 2b sind an gegenüberliegenden Rändern des Überwachungsbereichs so angeordnet, dass jeweils ein Empfänger 6 einem Sender 4 gegenüberliegend angeordnet ist und mit diesem eine Strahlachse bildet. Im vorliegenden Fall sind sechs Strahlachsen vorgesehen. Natürlich kann der Lichtvorhang auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale 6a zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang einen Sicherheitssensor bildet.

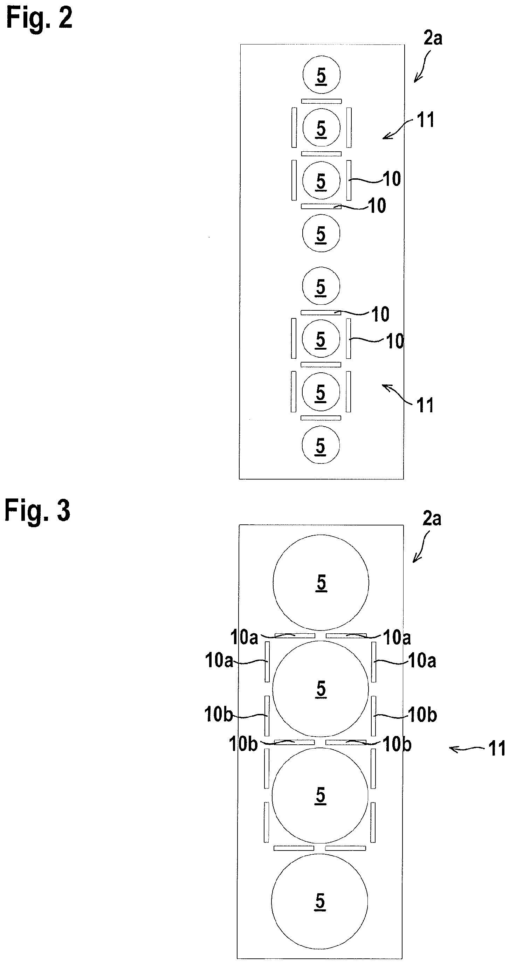

Figur 2 zeigt eine Draufsicht auf das Sendergehäuse 2a eines Lichtvorhang wie in Figur 1 beschrieben. Die die Sendeoptiken 5 bildenden Linsen liegen direkt in der Frontwand des Sendergehäuses oder unmittelbar hinter einer transparenten Abdeckung.

Erfindungsgemäß sind Linsen dieses Lichtvorhangs von Anzeigeelementen 10 umgeben, die jeweils eine Symbolanzeigeeinheit 11 bilden.

Im vorliegenden Fall sind zwei identische Symbolanzeigeeinheiten 11 vorgesehen, wobei die Anzeigeelemente 10 dieser Symbolanzeigeeinheiten 11 jeweils zwei Linsen umgeben und so eine Siebensegmentanzeige ausbilden. Die Anzeigeelemente 10 sind dabei dicht an den Linsen vorbeigeführt und beanspruchen so keinen zusätzlichen Bauraum.

Die identisch ausgebildeten Anzeigeelemente 10 sind linienförmig ausgebildet und strahlen dann, wenn sie, vorzugsweise über die Sendersteuerung, aktiviert sind, sichtbares Licht ab. Das abgestrahlte Licht kann monochrom oder farbig sein.

Die Anzeigeelemente 10 können selektiv aktiviert werden, wodurch unterschiedliche Symbole im vorliegenden Fall Ziffern von "0" bis "9", an der Siebensegmentanzeige angezeigt werden.

Für den Fall, dass die Symbolanzeigeeinheiten 11 direkt aneinander angrenzen, kann auch in der Sendersteuerung eine Umschaltung auf eine Bargraph-Anzeige vorgesehen sein, wobei die Bargraph-Anzeige von linear angeordneten Anzeigeelementen 10 beider Symbolanzeigeeinheiten 11 gebildet sein kann.

Die Anordnung von Symbolanzeigeeinheiten 11 gemäß Figur 2 kann in entsprechender Weise auch am Empfängergehäuse des Lichtvorhangs vorgesehen sein.

Figur 3 zeigt eine Variante der Ausführungsform gemäß Figur 2.

Figur 3 zeigt wieder (ausschnittweise) eine Draufsicht auf die Frontwand des Sendergehäuses. Im vorliegenden Fall erstrecken sich die die Sendeoptiken 5 bildenden Linien nahezu über die gesamte Breite des Sendergehäuses, so dass seitlich an diesen keine Anzeigeelemente 10 mehr vorbei geführt werden können. Auch sind benachbarte Linsen so dicht aneinander angeordnet, dass kein Anzeigeelement 10 zwischen diesen hindurch geführt werden kann.

Daher ist die eine Siebensegmentanzeige bildende Symbolanzeigeeinheit 11 im vorliegenden Fall aus Anzeigeelement 10 aufgebaut, die jeweils aus zwei identischen Subelementen 10a, 10b bestehen.

Die Subelemente 10a, 10b sind beabstandet zueinander und können so im Bereich zwischen zwei Linsen und seitlich zu diesen angeordnet werden und so die Linsen platzsparend umrahmen.

Die beiden ein Anzeigeelement 10 bildenden Subelemente 10a, 10b werden von der Auswerteeinheit 9 zeitgleich aktiviert und deaktiviert.

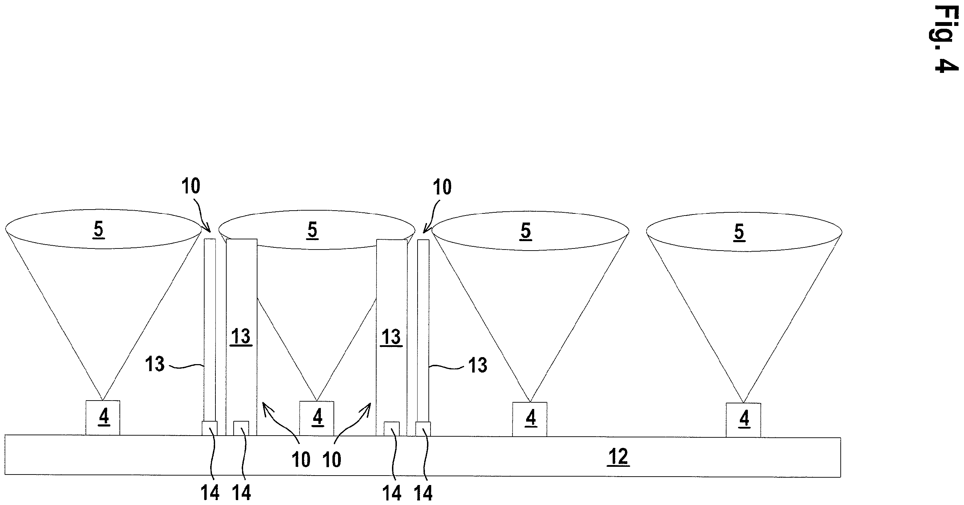

Figur 4 zeigt eine vorteilhafte konstruktive Ausgestaltung der eine Symbolanzeigeeinheit 11 bildenden Anzeigeelemente 10.

Figur 4 zeigt einen Ausschnitt auf einer Leiterplatte 12, auf welche Sender 4 des Lichtvorhangs bildende Leuchtdioden angeordnet sind.

Diesen Leuchtdioden sind die Sendeoptiken 5 bildenden Linsen vorgeordnet.

Figur 4 zeigt schematisch eine Symbolanzeigeeinheit 11 mit Anzeigeelementen 10, die eine der Linse umgeben. Jedes Anzeigeelement 10 besteht aus einem Lichtleiter 13 und einer zugeordneten Anzeige-Leuchtdiode 14.

Die Aktivierung eines solchen Anzeigeelements 10 erfolgt derart, dass die Anzeige-Leuchtdiode des Anzeigeelements 10 zum Beispiel von der Sendersteuerung 8 aktiviert wird, so dass diese sichtbares Licht abstrahlt. Dieses sichtbare Licht wird in den Lichtleiter 13 eingekoppelt so dass dieser entsprechend leuchtet.

### B ezugszei chenli ste

- (1): Optischer Sensor
- (2a,b): Gehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10): Anzeigeelement
- (10a,b): Subelemente
- (11): Symbolanzeigeeinheit
- (12): Leiterplatte
- (13): Lichtleiter
- (14): Anzeige-Leuchtdiode

## Patentansprüche

1. Optischer Sensor (1) zur Erfassung von Objekten in einem Erfassungsbereich mit wenigstens einer eine Linse aufweisenden Sensorkomponente in einem Gehäuse und mit wenigstens einer Auswerteeinheit (9) zur Generierung eines Objektfeststellungssignals abhängig von Sensorsignalen der wenigstens einen Sensorkomponente, wobei in einer Wand des Gehäuses mehrere die Linse umgebende Anzeigeelemente (10) vorgesehen sind, die sich zu einer Symbolanzeigeeinheit (11) ergänzen, **dadurch gekennzeichnet, dass** die Anzeigeelemente (10) vorgesehen sind, zwei Linsen zu umgeben, wobei diese Anzeigeelemente (10) eine Siebensegmentanzeige ausbilden, oder dass die Symbolanzeigeeinheit (11) eine Bargraph-Anzeige ausbildet, wobei die Symbolanzeigeeinheit (11) zwischen einer Bargraph-Anzeige und einer Symbolanzeige umschaltbar ist.

2. Optischer Sensor (1) nach Anspruch 1, **dadurch gekennzeichnet, dass** die Anzeigeelemente selektiv zur Abstrahlung von sichtbarem Licht aktivierbar sind.

3. Optischer Sensor (1) nach einem der Ansprüche 1 - 2, **dadurch gekennzeichnet, dass** die Anzeigeelemente (10) jeweils einen Lichtleiter (13) und eine zugeordnete Anzeige-Leuchtdiode (14) aufweist.

4. Optischer Sensor (1) nach Anspruch 3, **dadurch gekennzeichnet, dass** bei einem aktivierten Anzeigeelement (10) von der Anzeige-Leuchtdiode (14) emittiertes sichtbares Licht in den Lichtleiter (13) eingekoppelt wird.

5. Optischer Sensor (1) nach einem der Ansprüche 1 - 4, **dadurch gekennzeichnet, dass** mittels der Symbolanzeigeeinheit (11) unterschiedliche alphanumerische Zeichen anzeigbar sind.

6. Optischer Sensor (1) nach einem der Ansprüche 1 - 5, **dadurch gekennzeichnet, dass** Anzeigeelemente (10) in Subelemente (10a,b) unterteilt sind.

7. Optischer Sensor (1) nach einem der Ansprüche 1 - 6, **dadurch gekennzeichnet, dass** dieser mehrere Symbolanzeigeeinheiten (11) aufweist.

8. Optischer Sensor (1) nach einem der Ansprüche 1 - 7, **dadurch gekennzeichnet, dass** die Sensorkomponente, an der die Symbolanzeigeeinheit (11) vorgesehen ist, eine senderseitige Sensorkomponente ist.

9. Optischer Sensor (1) nach einem der Ansprüche 1 - 8, **dadurch gekennzeichnet, dass** die Sensorkomponente, an der die Symbolanzeigeeinheit (11) vorgesehen ist, eine empfangsseitige Sensorkomponente ist.

10. Optischer Sensor (1) nach einem der Ansprüche 1 - 9, **dadurch gekennzeichnet, dass** die Sensorkomponente, an der die Symbolanzeigeeinheit (11) vorgesehen ist, Bestandteil einer kombinierten Sende-Empfangseinheit ist.

## Claims

1. Optical sensor (1) for detecting objects in a detection region, having at least one sensor component, which has a lens, in a housing and having at least one evaluation unit (9) for generating an object detection signal as a function of sensor signals from said at least one sensor component, a plurality of display elements (10) which surround the lens being provided in a wall of the housing, which complement each other to form a symbol display unit (11), **characterised in that** the display elements (10) are provided to surround two lenses, wherein these display elements (10) form a seven-segment display, or **in that** the symbol display unit (11) forms a bar graph display, wherein the symbol display unit (11) can be switched between a bar graph display and a symbol display.

2. An optical sensor (1) according to claim 1, **characterised in that** the display elements can be selectively activated to emit visible light.

3. An optical sensor (1) according to any one of claims 1-2, **characterised in that** the display elements (10) each have a light guide (13) and an associated display light-emitting diode (14).

4. An optical sensor (1) according to claim 3, **characterised in that** visible light emitted by the indicator light-emitting diode (14) is coupled into the light guide (13) when the indicator element (10) is activated.

5. An optical sensor (1) according to one of claims 1-4, **characterised in that** different alphanumeric characters can be displayed by means of the symbol display unit (11).

6. An optical sensor (1) according to one of claims 1-5, **characterised in that** display elements (10) are divided into sub-elements (10a,b).

7. An optical sensor (1) according to any one of claims 1-6, **characterised in that** it comprises a plurality of symbol display units (11).

8. An optical sensor (1) according to any one of claims 1-7, **characterised in that** the sensor component on which the symbol display unit (11) is provided is a transmitter-side sensor component.

9. An optical sensor (1) according to any one of claims 1-8, **characterised in that** the sensor component on which the symbol display unit is provided is a receiving side sensor component.

10. An optical sensor (1) according to any one of claims 1-9, **characterised in that** the sensor component on which the symbol display unit (11) is provided is part of a combined transmitter-receiver unit.

## Revendications

1. Capteur optique (1) pour la détection d'objets dans une zone de détection, avec au moins un composant de capteur, qui présente une lentille, dans un boîtier et avec au moins une unité d'évaluation (9) pour générer un signal de détection d'objet en fonction de signaux de capteur de cet au moins un composant de capteur, une pluralité d'éléments d'affichage (10) entourant la lentille étant prévue dans une paroi du boîtier, qui se complètent pour former une unité d'affichage de symboles (11), **caractérisé en ce que** les éléments d'affichage (10) sont prévus pour entourer deux lentilles, ces éléments d'affichage (10) formant un affichage à sept segments, ou **en ce que** l'unité d'affichage de symboles (11) forme un affichage à barres, l'unité d'affichage de symboles (11) pouvant être commutée entre un affichage à barres et un affichage de symboles.

2. Capteur optique (1) selon la revendication 1, **caractérisé en ce que** les éléments d'affichage peuvent être activés sélectivement pour émettre de la lumière visible.

3. Capteur optique (1) selon l'une quelconque des revendications 1 à 2, **caractérisé en ce que** les éléments d'affichage (10) comportent chacun un guide de lumière (13) et une diode électroluminescente d'affichage associée (14).

4. Capteur optique (1) selon la revendication 3, **caractérisé en ce que** la lumière visible émise par la diode électroluminescente d'affichage (14) est couplée dans le guide de lumière (13) lorsque l'élément d'affichage (10) est activé.

5. Capteur optique (1) selon l'une des revendications 1 à 4, **caractérisé en ce que** différents caractères alphanumériques peuvent être affichés au moyen de l'unité d'affichage de symboles (11).

6. Capteur optique (1) selon l'une des revendications 1-5, **caractérisé en ce que** les éléments d'affichage (10) sont divisés en sous-éléments (10a, b).

7. Capteur optique (1) selon l'une des revendications 1-6, **caractérisé en ce qu'**il comprend une pluralité d'unités d'affichage de symboles (11).

8. Capteur optique (1) selon l'une quelconque des revendications 1-7, **caractérisé en ce que** le composant de capteur sur lequel l'unité d'affichage de symboles (11) est prévue est un composant de capteur côté émetteur.

9. Capteur optique (1) selon l'une quelconque des revendications 1 à 8, **caractérisé en ce que** le composant de capteur sur lequel l'unité d'affichage de symboles est prévue est un composant de capteur côté réception.

10. Capteur optique (1) selon l'une quelconque des revendications 1 à 9, **caractérisé en ce que** le composant de capteur sur lequel l'unité d'affichage de symboles (11) est prévue fait partie d'une unité combinée émetteur-récepteur.
